# EUROPEAN PATENT SPECIFICATION

(11) **EP 0 757 424 B1**
(45) Date of publication and mention of the grant of the patent: **08.04.1998**
(21) Application number: 95112093.0
(22) Date of filing: 01.08.1995
(51) Int. Cl.: H02K 13/10, H01R 13/24, H01R 39/46

(54) **Varistor disk assembly and method for mounting a varistor disk**
Zusammenbau eines scheibenförmigen Varistors und Montageverfahren eines scheibenförmigen Varistors
Ensemble de varistance en forme de disque et méthode pour le montage d'une varistance en forme de disque

(43) Date of publication of application: 05.02.1997
(73) Proprietor: Buehler Products, Inc., Raleigh, North Carolina 27636-3400 (US)
(72) Inventor: Crook, James C., Raleigh, North Carolina 27614 (US); McMillan Sr.,James E., Raleigh, North Carolina 27604 (US); Welterlin,Raymond E., Cary, North Carolina 27511 (US); Williamson,Lynn B., Raleigh, North Carolina 27606 (US); Holden, John R., New Bern, North Carolina 28562 (US); Marvin,Murray J., Durham, North Carolina 27707 (US)
(74) Representative: Heim, Hans-Karl, Dipl.-Ing.

(56) References cited:
- EP-A- 0 542 451
- GB-A- 2 000 914
- GB-A- 2 202 686

## Description

The invention relates to varistor disk assembly according to the preamble of claim 1 and a method for mounting a varistor disk. More specifically, the invention relates to a method for mounting a varistor disk to the commutator of a motor without the need for soldering.

A varistor disk assembly of the related art is known from the GB-A-2 202 686.

As a motor runs, its brushes make and break contact with the commutator. The inductance of the motor windings prevents the current from changing instantly when the brushes break their connection. As a result, a large voltage is generated, creating sparks. These sparks have a lot of high frequency content, causing electro-magnetic interference (EMI).

Varistor disks are often used to suppress the EMI which can be generated by the brushes on a DC motor. A varistor has high resistance at low voltages and has lower resistance as the voltage increases. It is similar to two zener diodes connected back to back to provide the same effect regardless of the polarity of the voltage. In order to suppress the EMI, a varistor is usually soldered to the tangs of the commutator, thereby providing a varistor effect between adjacent commutator segments.

The GB-A-2 202 686 is illustrative of a commutator which uses a varistor to suppress EMI. The varistor is clamped onto the terminals of the commutator using a unitary plastic clamping member having a plurality of fingers which serve to protect the varistor ring from vibration which might cause the varistor to break.

The GB-A-2177854 discloses the use of an electrically conductive rubber element to prevent EMI by suppressing sparks between motor brushes and respective commutator segments. The element is annular and is adhered to the terminal portions of the commutator by an electrically conductive adhesive.

The Ru-A-746790 discloses the use of a dielectric ring to suppress sparking. The dielectric ring is bonded to the commutator using an epoxy which is coated on the non-metallized side of the ring.

The JP-A-29,906 discloses the use of a variably conductive layer for reducing sparking between motor brushes and commutators.

Soldering of the varistor disk to the commutator tangs is a labor intensive operation not readily conducive to automation. Also, as successive parts of the varistor disk are heated during soldering, thermal stresses occur which can cause cracking of the varistor disk. Sometimes, there will be a cold solder joint, which will cause the loss of the suppression effect for the involved commutator segments. Although use of a conductive adhesive to adhere the varistor disk to the tangs avoids the thermal stresses resulting from soldering, it is only slightly less labor intensive than soldering and also is not conducive to automation.

It is the object of the invention to provide a varistor disk assembly and a method for mounting a varistor disk, by which a varistor disk can be easily and securely fixed to a commutator.

The object is solved by a varistor disk assembly comprising the characterizing features of claim 1 and a method for mounting a varistor disk according to claim 11.

In accordance with the present invention, there is provided a non-conductive retaining ring, a conductive member, and a varistor disk interposed between the base of the commutator and the distal end of the retaining ring. The retaining ring has an axial bore therethrough dimensioned to provide a friction fit with the motor shaft on which the commutator is mounted.

A tolerance absorbing member can be interposed between the varistor disk and the retaining ring, if required. The tolerance absorbing member can take the form of a conventional wavy or spring washer or a compressible elastomer.

The conductive member must be a device which will conduct current through its thickness from the commutator base to the varistor disk, but not conduct current between adjacent commutator segments, which would short them out. The conductive member should also be compressible so as to accept some variation in commutator geometry and not exert stress on the varistor disk which would cause it to break.

The conductive member can be an elastomeric disk which has many conductive elements which conduct only through its thickness, but not from side to side. Alternatively, the conductive member can be an extruded rubber ring provided at its outer periphery with a v-shaped groove corresponding to each commutator segment, and further provided with a conductive layer of silver or other conductive metal extruded in the grooves. Also, the conductive member can be an insulating ring of rubber or plastic holding five discrete spring contacts.

In one embodiment according to the invention, the proximal end of the retaining ring is necked in; and the conductive member, the varistor disk, and the tolerance absorbing member all have inner diameters dimensioned to receive the necked-in proximal end of the retaining ring.

In order to orient the varistor disk to the commutator, the proximal end of the retaining ring has at least one planar side formed in its periphery for alignment with one of the commutator segments, the distal end of the retaining ring has formed in its periphery a planar side parallel to the planar side of the proximal end, and the varistor disk is provided with a complementary planar side in its inner diameter. Proper alignment of the planar side of the proximal end of the retaining ring with one of the commutator segments and of the varistor disk with the proximal end of the retaining ring thus results in proper alignment of the varistor disk with the commutator base.

In another embodiment according to the invention, the phenolic base of the commutator is extended and the metal bars of the ends of the commutator segments are exposed. The conductive member is placed over the commutator base extension, followed by the varistor disk, and the retaining ring. The proximal end of the retaining ring has a cylindrical recess formed therein dimensioned to receive the extended base of the commutator.

In order to orient the varistor disk to the commutator, the base extension is molded with at least one planar side in alignment with one of the commutator segments, and the varistor disk is provided with a complementary planar side in its inner diameter. Proper alignment of the varistor disk with the base extension thus results in proper alignment of the varistor disk with the commutator base.

The invention is better understood by reading the following Detailed Description of the Preferred Embodiments with reference to the accompanying drawing figures, in which like reference numerals refer to like elements throughout, and in which:

Figure 1 is an exploded, base-end perspective view of a commutator having a varistor disk assembly for mounting to its base in accordance with a first embodiment of the present invention.

Figure 2 is an exploded, opposite-end perspective view of the commutator and varistor disk assembly of Figure 1.

Figure 3 is an alternative embodiment of the conductive member of Figure 1.

Figure 4 is an alternative embodiment of the tolerance absorbing member of Figure 1.

Figure 5 is a side elevational view of a commutator having varistor disk assembly mounted to its base in accordance with the present invention.

Figure 6 is a perspective view of the commutator and varistor disk assembly of Figure 5.

In describing preferred embodiments of the present invention illustrated in the drawings, specific terminology is employed for the sake of clarity. However, the invention is not intended to be limited to the specific terminology so selected, and it is to be understood that each specific element includes all technical equivalents which operate in a similar manner to accomplish a similar purpose.

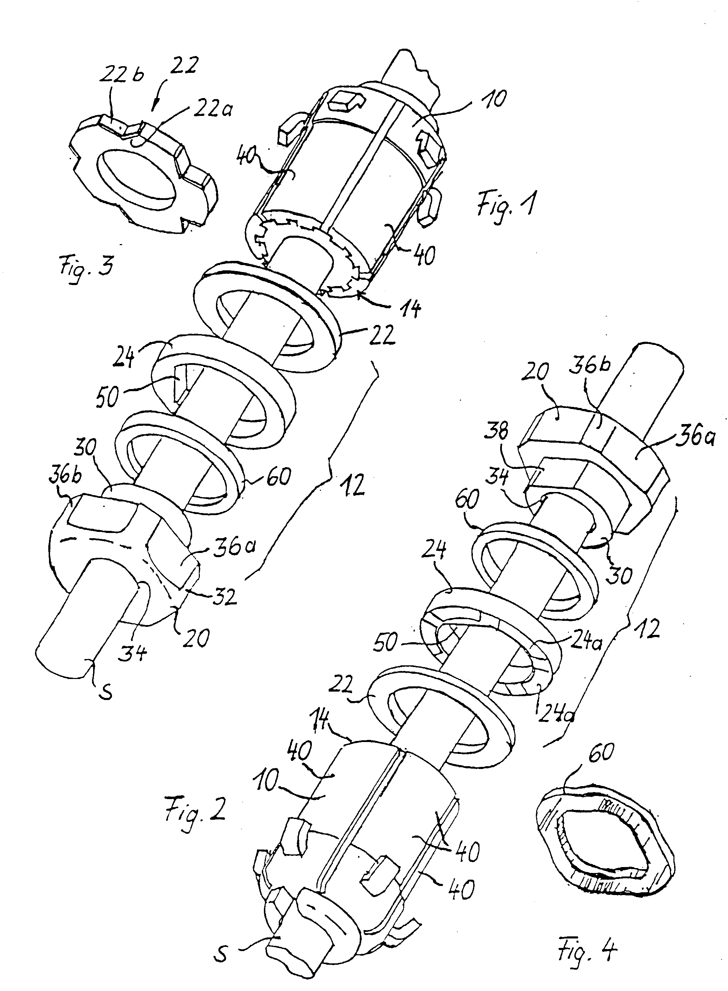

Referring now to Figures 1 and 2 there is shown a first embodiment of a portion of a motor armature in which a commutator 10 is concentrically mounted on a motor shaft S and a varistor disk assembly 12 is mounted to the commutator base 14 in accordance with the present invention. Varistor disk assembly 12 includes a retaining ring 20, a conductive member 22, and a varistor disk 24 having a plurality of solder pads 24a.

Retaining ring 20 has a necked-in proximal end 30 facing towards commutator 10, an expanded distal end 32 facing away from commutator 10, and a central axial bore 34 therethrough dimensioned to provide a friction fit for shaft S. As shown in Figures 1 and 2, the periphery of distal end 32 is formed with five longer planar sides or segments 36a alternating with five shorter sides or segments 36b, while the periphery of proximal end 30 is formed with a planar side 38. Planar sides 36a define alignment means by which retaining ring 20 can be aligned with commutator segments 40. Planar side 38 can be parallel to one of planar sides 36a, as shown in Figure 2, but need not be, as long as the orientation is fixed to result in proper alignment of commutator segments 40 with varistor disk 24, as explained hereinafter.

Conductive member 22 and varistor disk 24 are interposed between retaining ring 20 and commutator 10, with conductive member 22 bearing against segments 40 of commutator 10 and solder pads 24a of varistor disk 24 bearing against conductive member 22.

The number of solder pads 24a on varistor disk 24 corresponds to the number of commutator segments 40, in this case, five. Conductive member 22 and varistor disk 24 are generally annular in shape, all having inner diameters dimensioned to enable them to pass freely over shaft S and to receive proximal end 30 of retaining ring 20. Varistor disk 24 is provided with a planar side 50 in its inner diameter complementary to planar side 38 of proximal end 30 of retaining ring 20. Proper alignment of proximal end 30 of retaining ring 20 with commutator segments 40 and of varistor disk 24 with proximal end 30 of retaining ring 20 thus results in proper alignment of the solder pads 24a of varistor disk 24 with commutator segments 40.

In order for varistor disk 24 to function properly, conductive member 22 must be in electrical contact with commutator segments 40 and varistor disk 24 must be in electrical contact with conductive member 22. If proximal end 30 of retaining ring 20 is longer than the combined thickness of varistor disk 24 and conductive member 22, then there will be play between varistor disk 24, conductive member 22, and commutator segments 40. To avoid this problem and ensure the proper electrical contact, a tolerance absorbing member 60 can if necessary be interposed between varistor disk 24 and retaining ring 20. Tolerance absorbing member 60 can take the form of a compressible elastomeric disk, as shown in Figure 1, or a conventional spring or wavy washer, as shown in Figure 4.

Conductive member 22 must be a device which will conduct current through its thickness from the commutator base to varistor disk 24, but not conduct current between adjacent commutator segments 40, which would short them out. Conductive member 22 should also be compressible so as to accept some variation in commutator geometry and not exert stress on varistor disk 24 which would cause it to break. Thus, as shown in Figure 1, conductive member 22 can be an elastomeric disk which has many conductive elements (not shown) which conduct only through its thickness, but not from side to side.

Alternatively, as shown in Figure 3, conductive member 22 can be an extruded rubber ring provided at its outer periphery with a groove 22a corresponding to each commutator segment 40, and further provided with a conductive layer 22b of silver or other conductive metal extruded in grooves 22a. As illustrated in Figure 3, grooves 22a are v-shaped. However, grooves 22a can also be w-shaped, scalloped, rectangular, or any other shape which would permit the extrusion of conductive layers 22b at spaced locations on the outer periphery of conductive member 22. Also, conductive member 22 can be an insulating ring of rubber or plastic holding five discrete contacts (not shown) made of springs or other conductive material, e.g. silver-filled elastomer plugs.

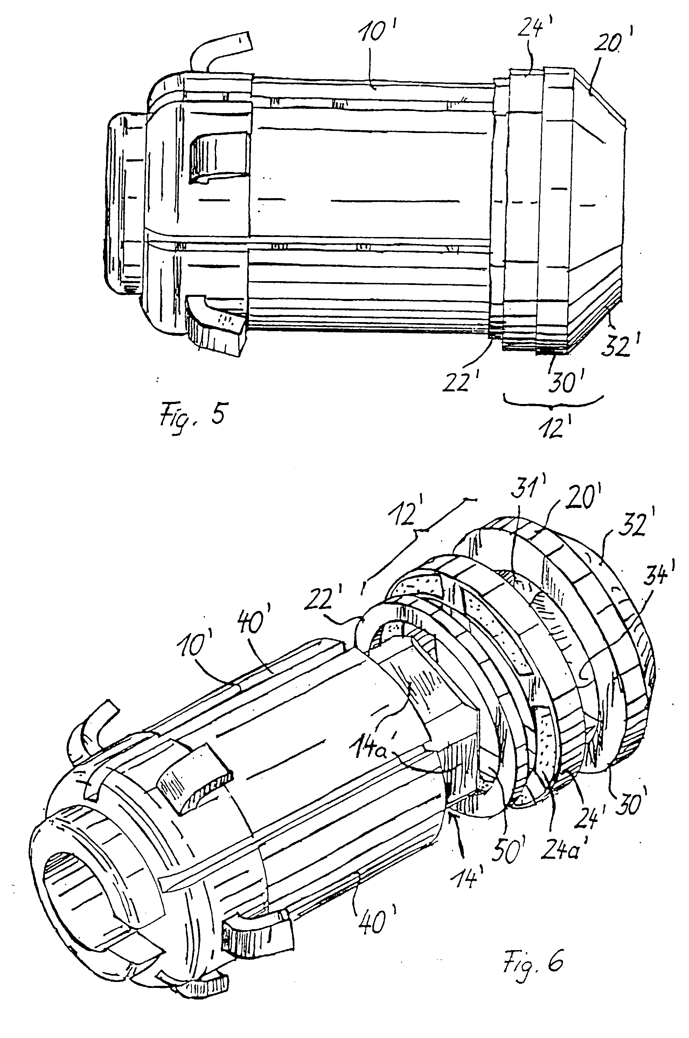

Referring now to Figures 5 and 6, there is shown a second embodiment of a commutator 10' concentrically mounted on a shaft (not shown) and having a varistor disk assembly 12' for mounting to the commutator base extension 14' in accordance with the present invention. Varistor disk assembly 12' includes a non-conductive retaining ring 20', a conductive member 22', and a varistor disk 24'.

In the embodiment of Figures 5 and 6, the phenolic base of commutator 10' is extended to form a commutator base extension 14' and the metal bars of the ends of the commutator segments 40' are exposed. Conductive member 22' is placed over commutator base extension 14', followed by varistor disk 24'. Retaining ring 20' is placed over commutator base extension 14' following varistor disk 24' to hold the assembly 12' together.

Retaining ring 20' has a proximal end 30' facing towards commutator 10' and having a recess 31' formed therein, a tapered distal end 32' facing away from commutator 10', and a central axial bore 34' therethrough dimensioned to provide a friction fit for the shaft. Recess 31' is dimensioned to seat base extension 14' therein. In order to orient varistor disk 24' to commutator 10', base extension 14' is molded with at least one planar side 14a', and varistor disk 24' is provided with a complementary planar side 50' in its inner diameter. Planar side 14a' can be aligned with one of commutator segments 40', as shown in Figure 6, but need not be, as long as its orientation is fixed so that proper alignment of varistor disk 24' with base extension 14' results in proper alignment of solder pads 24a' of varistor disk 24' with the commutator base.

Conductive member 22' is substantially identical to conductive member 22 described above with respect to the first embodiment shown in Figures 1 and 2. A tolerance absorbing member 60 as described above can be used if required between retaining ring 20' and varistor disk 24' in order to insure proper contact between the various elements.

Modifications and variations of the above-described embodiments of the present invention are possible, as appreciated by those skilled in the art in light of the above teachings. For example, although commutators 10 and 10' as shown in Figures 1, 2, 5, and 6 have five segments, commutators with different numbers of segments are known, and the invention can be adapted accordingly, as will be appreciated by those of skill in the art, i.e. by changing the number of solder pads on the varistor disk and the number of sides on the proximal end of the retaining ring or the number of planar sides on the extension of the commutator base to correspond to the number of commutator segments.

In the case of a commutator having only three segments, it is noted that a separate conductive member may not be necessary, as three points geometrically define a plane in space, and a varistor disk would therefore be able to make contact with raised points at the commutator segments with the tolerance absorbing member and the retaining ring bearing against its distal side. However, for commutators having more than three segments, a compressive conducting member is required to assure contact between the commutator and the varistor disk.

Modifications and variations are possible within the scope of the appended claims.

## Claims

1. Varistor disk assembly for mounting to a commutator (10) mounted on a motor shaft (S), the commutator (10) having a plurality of peripheral segments (40), said varistor disk assembly (12) comprising:
- a varistor disk (24) and
- a non-conductive retaining ring (20) for retaining said varistor disk (24) in place,
**characterized** in that
- said retaining ring (20) has an axial bore therethrough dimensioned to provide a friction fit with the motor shaft (S), a proximal end (30) for orientation facing towards a commutator base (14), and a distal end (32) for orientation facing away from the commutator base (14),
- a conductive member (22) is provided, said conductive member (22) being configured to receive said motor shaft (S) therethrough for placement at the commutator base (14),
- said varistor disk (24) is configured to receive said motor shaft (S) therethrough for interposition between said conductive member (22) and said proximal end (30) of said retaining ring (20), and
- said conductive member (22) is constructed to conduct current through its thickness from the commutator base (14) to said varistor disk (24) but not to conduct current between adjacent commutator segments (40).

2. Varistor disk assembly of claim 1,
**characterized** in that
said conductive member (22) is compressible.

3. Varistor disk assembly of claim 1 or 2, characterized in that said proximal end (30) of said retaining ring (20) is necked in, and said conductive member (22) and said varistor disk (24) are generally annular in shape and have inner diameters dimensioned to enable them to pass freely over the motor shaft (S) and to receive said proximal end (30) of said retaining ring (20).

4. Varistor disk assembly of claim 1 or 2, characterized in that the commutator base (14) includes an extension (14') molded with at least one planar side (14a'), and the inner diameter of said varistor disk (24') is provided with a planar side (50') complementary to said planar side (14a') of said extension (14'), said planar side (14a') of said extensions (14') being oriented to result in proper alignment of said varistor disk (24') with said commutator (10').

5. Varistor disk assembly of claim 1, characterized in that
a tolerance absorbing member (60) for interposition between said varistor disk (24) and said retaining ring (20) is provided.

6. Varistor disk assembly of claim 5, characterized in that said tolerance absorbing member (60) comprises a conventional wavy washer.

7. Varistor disk assembly of claim 5, characterized in that said tolerance absorbing member (60) comprises a compressible elastomer.

8. Varistor disk assembly of claim 1, characterized in that
said conductive member (22) comprises an extruded rubber ring provided at its outer periphery with a plurality of spaced grooves (22a) and a layer of conductive material (22b) extruded in said grooves (22a).

9. Varistor disk assembly of claim 3, characterized in that said proximal end (30) of said retaining ring (20) has a periphery formed with a planar side (38), and the inner diameter of said varistor disk (24) is provided with a planar side (50) complementary to said planar side (38) of said proximal end (30) of said retaining ring (20), said planar side (38) of said retaining ring (20) being oriented to result in proper alignment of said varistor disk (24) with said commutator (10).

10. Varistor disk assembly according to anyone of the claims 1 to 9, characterized in that said varistor disk assembly (12) is a part of a motor armature comprising:
a motor shaft (S) and
a commutator (10) concentrically mounted on said motor shaft (S), said commutator (10) including a base (14) and a plurality of peripheral segments (40).

11. Method of mounting a varistor disk (24) to a base (14) of a commutator (10) mounted on a motor shaft (S), comprising the steps of:
positioning an annular conductive member (22) at the commutator base (14),
positioning an annular varistor disk (24) adjacent to the conductive member (22) and
retaining the conductive member (22) and the varistor disk (24) in place using a non-conductive retaining ring (20) having an axial bore therethrough dimensioned to provide a friction fit with the motor shaft (S).

12. Method of claim 11, wherein further comprising the step of positioning a tolerance absorbing member (60) between the varistor disk (24) and the retaining ring (20).

13. Method of claim 11, wherein the commutator (10) has a plurality of peripheral segments (40), the retaining ring (20) has a necked-in proximal end facing towards the commutator base (14), the conductive member (22) and said varistor disk (24) have inner diameters dimensioned to enable them to pass freely over the motor shaft (S) and to receive the proximal end (30) of the retaining ring (20), the periphery of the distal end (32) of the retaining ring (20) is formed with at least one planar side (36a), the periphery of the proximal end (30) of the retaining ring (20) is formed with a planar side (38), and the inner diameter of the varistor disk (24) is provided with a planar side (50) complementary to the planar side (38) of the proximal end (30) of the retaining ring (20), said method further comprising the steps of:
aligning the planar side (50) of the varistor disk (24) with the planar side (38) of the proximal end (30) of the retaining ring (20), and
aligning the planar side (36a) of the distal end (32) of the retaining ring (20) with one of the segments (40) the commutator (10).

14. Method of claim 11, wherein the commutator (10) has a plurality of peripheral segments (40), the commutator base (14) includes an extension (14') formed with at least one planar side (14a') and the inner diameter of the varistor disk (24) is provided with a planar side (50') complementary to the planar side (14a') of said extension (14'), said method further comprising the step of:
aligning the planar side (50') of the varistor disk (24) with the planar side (14a') of the extension (14') of the commutator base (14).

## Patentansprüche

1. Varistorscheiben-Anordnung zur Montage an einem Kommutator (10), welcher an einer Motorwelle (S) angebracht ist, wobei der Kommutator (10) eine Vielzahl peripherer Segmente (40) aufweist und die Varistorscheiben-Anordnung
- eine Varistorscheibe (24) und
- einen nicht leitfähigen Haltering (20) zum Halten der Varistorscheibe (24) an ihrem Platz aufweist,
dadurch **gekennzeichnet**,
- daß der Haltering (20) eine durchgehende axiale Bohrung aufweist, welche so dimensioniert ist, um einen Reibungsschluß mit der Motorwelle (S) zu gewährleisten, und ein proximales Ende (30) zur Ausrichtung, welches einer Kommutator-Grundfläche (14) zugewandt ist, sowie ein distales Ende (32) zur Ausrichtung, welches von der Kommutator-Grundfläche (14) abgewandt ist,
- daß ein leitfähiges Glied (22) vorgesehen ist, wobei das leitfähige Glied (22) zur Anordnung an der Kommutator-Grundfläche (14) so konfiguriert ist, daß die Motorwelle (S) durch es hindurch verläuft,
- daß die Varistorscheibe (24) zur Einfügung zwischen dem leitfähigen Glied (22) und dem proximalen Ende (30) des Halterings (20) so gestaltet ist, daß die Motorwelle (S) durch sie hindurch verläuft, und
- daß das leitfähige Glied (22) so gestaltet ist, daß es Strom längs seiner Dicke von der Kommutator-Grundfläche (14) zu der Varistorscheibe (24) leitet, aber keinen Strom zwischen benachbarten Kommutator-Segmenten (40) leitet.

2. Varistorscheiben-Anordnung nach Anspruch 1,
dadurch **gekennzeichnet**,
daß das leitfähige Glied (22) zusammendrückbar ist.

3. Varistorscheiben-Anordnung nach Anspruch 1 oder 2,
dadurch **gekennzeichnet**,
daß das proximale Ende (30) des Halterings (20) eingehalst ist und das leitfähige Glied (22) und die Varistorscheibe (24) im wesentlichen kreisförmig sind und innere Durchmesser aufweisen, die so dimensioniert sind, daß sie ungehindert über die Motorwelle (S) geführt werden können und das proximale Ende (30) des Halterings (20) aufnehmen können.

4. Varistorscheiben-Anordnung nach Anspruch 1 oder 2,
dadurch **gekennzeichnet**,
daß die Kommutator-Grundfläche (14) eine Verlängerung (14') aufweist, welche mit mindestens einer ebenen Seite (14a') ausgebildet ist, und der innere Durchmesser der Varistorscheibe (24') eine zur ebenen Seite (14a') der Verlängerung (14') entsprechende ebene Seite (50') aufweist, wobei die ebene Seite (14a') der Verlängerung (14') so orientiert ist, daß sich eine geeignete Ausrichtung der Varistorscheibe (24') mit dem Kommutator (10') ergibt.

5. Varistorscheiben-Anordnung nach Anspruch 1,
dadurch **gekennzeichnet**,
daß ein Toleranzen aufnehmendes Glied (60) zur Einfügung zwischen der Varistorscheibe (24) und dem Haltering (20) vorgesehen ist.

6. Varistorscheiben-Anordnung nach Anspruch 5,
dadurch **gekennzeichnet**,
daß das Toleranzen aufnehmende Glied (60) eine herkömmliche gewellte Unterlegscheibe aufweist.

7. Varistorscheiben-Anordnung nach Anspruch 5,
dadurch **gekennzeichnet**,
daß das Toleranzen aufnehmende Glied (60) ein zusammendrückbares Elastomer aufweist.

8. Varistorscheiben-Anordnung nach Anspruch 1,
dadurch **gekennzeichnet**,
daß das leitfähige Glied (22) einen extrudierten Gummiring aufweist, an dessen äußerem Umfang eine Vielzahl beabstandeter Nuten (22a) und eine Lage leitfähigen Materials (22b), welches in die Nuten (22a) extrudiert ist, vorgesehen sind.

9. Varistorscheiben-Anordnung nach Anspruch 3,
dadurch **gekennzeichnet**,
daß das proximale Ende (30) des Halteringes (20) einen Umfang, der mit einer ebenen Seite (38) ausgebildet ist, aufweist, und daß der innere Durchmesser der Varistorscheibe (24) mit einer ebenen Seite (50) versehen ist, die der ebenen Seite (38) des proximalen Endes (30) des Halteringes (20) entspricht, wobei die ebene Seite (38) des Halteringes (20) so orientiert ist, daß sich eine geeignete Ausrichtung der Varistorscheibe (24) mit dem Kommutator (10) ergibt.

10. Varistorscheiben-Anordnung nach einem der Ansprüche 1 bis 9,
dadurch **gekennzeichnet**,
daß die Varistorscheiben-Anordnung (12) ein Teil eines Motorläufers mit
- einer Motorwelle (S) und
- einem Kommutator (10), der konzentrisch auf der Motorwelle (S) montiert ist, wobei der Kommutator (10) eine Grundfläche (14) und eine Vielzahl peripherer Segmente (40) aufweist,
ist.

11. Verfahren zur Montage einer Varistorscheibe (24) an eine Grundfläche (14) eines Kommutators (10), welcher auf eine Motorwelle (S) montiert ist, mit den Schritten:
- Positionieren eines kreisförmigen leitfähigen Gliedes (22) an der Kommutator-Grundfläche (14),
- Positionieren einer kreisförmigen Varistorscheibe (24) angrenzend an das leitfähige Glied (22) und
- Sichern des leitfähigen Gliedes (22) und der Varistorscheibe (24) an deren Plätzen, unter Zuhilfenahme eines nicht leitfähigen Halterings (20), der eine durchgehende Bohrung aufweist, die so dimensioniert ist, um einen Reibungsschluß mit der Motorwelle (S) zu gewährleisten.

12. Verfahren nach Anspruch 11,
mit dem weiteren Schritt des Positionierens eines Toleranzen aufnehmenden Gliedes (60) zwischen der Varistorscheibe (24) und dem Haltering (20).

13. Verfahren nach Anspruch 11,
wobei der Kommutator (10) eine Vielzahl peripherer Segmente (40) aufweist, der Haltering (20) ein eingehalstes nahes Ende, welches der Kommutator-Grundfläche (14) zugewandt ist, aufweist, das leitfähige Glied (22) und die Varistorscheibe (24) so dimensionierte innere Durchmesser haben, daß sie ungehindert über die Motorwelle (S) geführt werden können und sie das proximale Ende (30) des Halteringes (20) aufnehmen können, die Außenfläche des distalen Endes (32) des Halteringes (20) mit zumindest einer ebenen Seite (36a) ausgebildet ist, die Außenseite des proximalen Endes (30) des Halteringes (20) mit einer ebenen Seite (38) ausgebildet ist und der innere Durchmesser der Varistorscheibe (24) mit einer ebenen Seite (50) versehen ist, die komplementär zu der ebenen Seite (38) des proximalen Endes (30) des Halteringes (20) ist, wobei das Verfahren weiterhin die Schritte:
- Ausrichten der ebenen Seite (50) der Varistorscheibe (24) mit der ebenen Seite (38) des proximalen Endes (30) des Halteringes (20) und
- Ausrichten der ebenen Seite (36a) des distalen Endes (32) des Halteringes (20) mit einem der Segmente (40) des Kommutators (10)
aufweist.

14. Verfahren nach Anspruch 11,
wobei der Kommutator (10) eine Vielzahl peripherer Segmente (40) aufweist, die Kommutator-Grundfläche (14) eine Verlängerung (14') aufweist, welche mit zumindest einer ebenen Seite (14a') ausgebildet ist, und der innere Durchmesser der Varistorscheibe (24) mit einer ebenen Seite (50') versehen ist, die komplementär zu der ebenen Seite (14a') der Verlängerung (14') ist, wobei das Verfahren weiterhin den Schritt:
- Ausrichten der ebenen Seite (50') der Varistorscheibe (24) mit der ebenen Seite (14a') der Verlängerung (14') der Kommutator-Grundfläche (14)
aufweist.

## Revendications

1. Ensemble de disque de varistance destiné à être monté sur un commutateur (10) monté sur un arbre moteur (S), le commutateur (10) ayant une pluralité de segments périphériques (40), ledit ensemble de disque de varistance (12) comprenant :
- un disque de varistance (24), et
- une bague de retenue non conductrice (20) pour retenir ledit disque de varistance (24) en place,
caractérisé en ce que
- ladite bague de retenue (20) a un passage axial traversant dimensionné pour fournir un ajustage à friction avec l'arbre moteur (S), une extrémité proximale (30) pour son orientation faisant face à une base de commutateur (14), et une extrémité distale (32) pour son orientation dirigée à l'écart de la base de commutateur (14),
- un organe conducteur (22) est prévu, ledit organe conducteur (22) étant conçu pour recevoir ledit arbre moteur (S) au travers pour être placé à la base de commutateur (14),
- ledit disque de varistance (24) est conçu pour recevoir ledit arbre moteur (S) au travers pour son interposition entre ledit organe conducteur (22) et ladite extrémité proximale (30) de ladite bague de retenue (20), et
- ledit organe conducteur (22) est construit pour conduire l'électricité suivant son épaisseur depuis ladite base de commutateur (14) vers ledit disque de varistance (24) mais n'est pas conducteur de l'électricité entre des segments adjacents de commutateur (40).

2. Ensemble de disque de varistance selon la revendication 1, caractérisé en ce que ledit organe conducteur (22) est compressible.

3. Ensemble de disque de varistance selon la revendication 1 ou 2, caractérisé en ce que ladite extrémité proximale (30) de ladite bague de retenue (20) est nervurée, et ledit organe conducteur (22) et ledit disque de varistance (24) sont généralement de forme annulaire et ont des diamètres intérieurs dimensionnés pour leur permettre de passer librement sur l'arbre moteur (S) et pour recevoir ladite extrémité proximale (30) de ladite bague de retenue (20).

4. Ensemble de disque de varistance selon la revendication 1 ou 2, caractérisé en ce que la base de commutateur (14) inclut un prolongement (14') moulé avec au moins une face plane (14a'), et le diamètre intérieur dudit disque de varistance (24') est prévu avec un côté plat (50') complémentaire à ladite face plane (14a') dudit prolongement (14'), ladite face plane (14a') dudit prolongement (14') étant orientée pour assurer un alignement adapté dudit disque de varistance avec ledit commutateur (10').

5. Ensemble à disque de varistance selon la revendication 1, caractérisé en ce qu'un organe de compensation de tolérance (60) est prévu interposé entre ledit disque de varistance (24) et ladite bague de retenue (20).

6. Ensemble à disque de varistance selon la revendication 5, caractérisé en ce que ledit organe de compensation de tolérance (60) comprend une rondelle ondulée conventionnelle.

7. Ensemble à disque de varistance selon la revendication 5, caractérisé en ce que ledit organe de compensation de tolérance (60) comprend un élastomère compressible.

8. Ensemble de disque de varistance selon la revendication 1, caractérisé en ce que ledit organe conducteur (22) comprend une bague en caoutchouc extrudée munie à sa périphérie extérieure d'une pluralité de gorges (22a) espacées et d'une couche de matériau conducteur (22b) extrudé dans lesdites gorges (22a).

9. Ensemble de disque de varistance selon la revendication 3, caractérisé en ce que ladite extrémité proximale (30) de ladite bague de retenue (20) a une périphérie formée avec une face plane (38), et le diamètre intérieur dudit disque de varistance (24) est muni d'une face plane (50) complémentaire à ladite face plane (38) de ladite extrémité proximale (30) de ladite bague de retenue (20), ladite face plane (38) de ladite bague de retenue (20) étant orientée pour assurer un alignement approprié dudit disque de varistance (24) avec ledit commutateur (10).

10. Ensemble de disque de varistance selon l'une quelconque des revendications 1 à 9, caractérisé en ce que ledit ensemble de disque de varistance (12) est une partie d'une armature de moteur comprenant :
un arbre moteur (S), et
un commutateur (10) monté de manière concentrique sur ledit arbre moteur (S), ledit commutateur (10) incluant une base (14) et une pluralité de segments périphériques (40).

11. Procédé de montage d'un disque de varistance (24) sur une base (14) d'un commutateur (10) monté sur un arbre moteur (S), comprenant les étapes de :
positionner un organe conducteur annulaire (22) à la base du commutateur (14),
positionner un disque de varistance annulaire (24) adjacent à l'organe conducteur (22), et
retenir l'organe conducteur (22) et le disque de varistance (24) en place en utilisant une bague de retenue conductrice (20) ayant un passage axial traversant dimensionné pour fournir un ajustement à friction avec l'arbre moteur (S).

12. Procédé selon la revendication 11, dans lequel il comprend en outre l'étape de positionner un organe de compensation de tolérance (60) entre le disque de varistance (24) et la bague de retenue (20).

13. Procédé selon la revendication 11, dans lequel le commutateur (10) a une pluralité de segments périphériques (40), la bague de retenue (20) a une extrémité proximale nervurée orientée vers la base de commutateur (14), l'organe conducteur (22) et ledit disque de varistance (24) ont des diamètres internes dimensionnés pour permettre à ceux-ci de passer de manière libre sur l'arbre moteur (S) et pour recevoir l'extrémité proximale (30) de la bague de retenue (20), la périphérie de l'extrémité distale (32) de la bague de retenue (20) est formée avec au moins une face plane (36a), la périphérie de l'extrémité proximale (30) de la bague de retenue (20) est formée avec une face plane (38) et le diamètre intérieur du disque de varistance (24) est muni d'une face plane (50) complémentaire à la face plane (38) de l'extrémité proximale (30) de la bague de retenue (20), ledit procédé comportant les étapes de :
aligner la face plane (50) du disque de varistance (24) avec la face plane (38) de l'extrémité proximale (30) de la bague de retenue (20), et
aligner la face plane (36a) de l'extrémité distale (32) de la bague de retenue (20) avec l'un des segments (40) du commutateur (10).

14. Procédé selon la revendication 11, dans lequel le commutateur (10) a une pluralité de segments périphériques (40), la base de commutateur (14) inclut un prolongement (14') configuré avec au moins une face plane (14a') et le diamètre intérieur du disque de varistance (24) est muni d'une face plane (50') complémentaire à la face plane (14a') du prolongement (14'), le procédé comprenant en outre l'étape de
aligner la face plane (50') du disque de varistance (24) avec la face plane (14a') du prolongement (14') de la base de commutateur (14).
